# EUROPEAN PATENT SPECIFICATION

(11) **EP 4 119 434 B1**
(45) Date of publication and mention of the grant of the patent: **05.03.2025**
(21) Application number: 22184681.9
(22) Date of filing: 13.07.2022
(51) Int. Cl.: B63B 1/38, B63H 21/21

(54) **CONTROL DEVICE, CONTROL METHOD FOR CONTROL DEVICE, AND CONTROL PROGRAM FOR CONTROL DEVICE**
STEUERVORRICHTUNG, STEUERVERFAHREN FÜR STEUERVORRICHTUNG UND STEUERPROGRAMM FÜR STEUERVORRICHTUNG
DISPOSITIF DE COMMANDE, PROCÉDÉ DE COMMANDE POUR DISPOSITIF DE COMMANDE, ET PROGRAMME DE COMMANDE POUR DISPOSITIF DE COMMANDE

(30) Priority: 15.07.2021 JP 2021117228
(43) Date of publication of application: 18.01.2023
(73) Proprietor: Nabtesco Corporation, Tokyo 102-0093 (JP)
(72) Inventor: Kawatani, Toru, Tokyo, 102-0093 (JP); Kawasaki, Naoyuki, Tokyo, 102-0093 (JP)
(74) Representative: Grünecker Patent- und Rechtsanwälte PartG mbB

(56) References cited:
- EP-A1- 2 272 747
- EP-A1- 2 778 039
- EP-A1- 3 162 690

## Description

The present invention relates to a control device, a control method for the control device, and a control program for the control device.

A ship including an air lubricating device to produce an air lubrication effect is known. JP 2012-056328 A, for example, discloses a ship that includes an air lubricating device to blow air outward from a bottom of the ship. The ship is equipped with an air blowing device to blow air outward from the bottom of the ship and suppression means to suppress a relative decrease in thickness of an air layer put over a predetermined area of the ship bottom. The air blowing device has air outlets that are provided in a middle area, a port area, and a starboard area of the ship bottom.

EP 2 272 747 A1 relates to an air lubrication system of a vessel, wherein the ejection of air bubbles is controlled based a fuel consumption efficiency of a motor, a draft, whether conditions, or a velocity of the vessel.

EP 2 778 039 A1 and P 3 162 690 A1 relate to control of an air lubrication system of a vessel, wherein the amount and/or starting/stopping of bubble ejection is controlled based on a draft, a load, a movement of the vessel, or an operating state of the engine.

The air lubricating device that is in operation exerts an effect of reducing resistance of a hull (hereinafter referred to as an "air lubrication effect") through air bubbles blown against the hull. The air lubrication effect with which the resistance of the hull is reduced helps to reduce energy consumed by a propulsion device of the ship. However, the air lubricating device in operation consumes energy for blowing air outward. Hence, it is preferred that the air lubricating device be operated when an effect of reducing consumed energy is properly produced in total in consideration of a balance between a decrease in energy consumed by the propulsion device and an increase in energy consumed by the air lubricating device, rather than allowing the air lubricating device to always operate.

It is, for example, conceivable that the air lubricating device runs or stops according to an operator's decision. However, this case cannot necessarily produce an air lubrication effect in a proper manner.

In terms of proper production of an air lubrication effect, the ship described in JP 2012-056328 A does not provide a satisfactory solution.

In view of the above problem, an object of the present invention is to provide a technique that enables a control device to produce an air lubrication effect properly.

This is achieved by the features of the independent claim. The dependent claims describe advantageous embodiments.

According to the present invention, a technique can be provided that enables a control device to produce an air lubrication effect properly.

### BRIEF DESCRIPTION OF THE DRAWINGS

Fig. 1 is a schematic view showing a ship to which a control device according to the present invention is applied;
Fig. 2 is a schematic block diagram showing a control device according to a first embodiment of the present invention;
Fig. 3 is a graph schematically showing an example of a relationship between an amount of air blown out by a blow mechanism in Fig. 2 and an amount of energy used by the blow mechanism;
Fig. 4 is another graph schematically showing an example of a relationship between an amount of air blown out by the blow mechanism in Fig. 2 and an amount of energy used by the blow mechanism;
Fig. 5 is a graph schematically showing an example of a relationship between an output from a main engine in Fig. 2 and an amount of fuel consumed by the main engine;
Fig. 6 is a graph schematically showing an example of a relationship between an amount of air blown out by the blow mechanism in Fig. 2 and resistance of a hull;
Fig. 7 is a flowchart showing an example of a process executed by the control device in Fig. 2;
Fig. 8 is a schematic block diagram showing a control device according to a second embodiment of the present invention; and
Fig. 9 is a flowchart showing an example of a process executed by the control device in Fig. 8.

### DETAILED DESCRIPTION OF THE INVENTION

Terms used herein will be described. In the present specification, a velocity of a ship hull relative to the water is simply referred to as a "ship velocity", and a hull draft at present is simply referred to as a "draft". Frictional resistance of the hull to the water is referred to as "resistance of the hull" and actual resistance of the hull at present is referred as "actual resistance of the hull". Unless otherwise described, increasing an amount of air bubbles being blown out includes starting an action of blowing air bubbles outward, and decreasing an amount of air bubbles being blown out includes stopping an action of blowing air bubbles outward. A time when the blow mechanism is blowing air out is sometimes referred to as a "time of blowing", and a time when the blow mechanism is not blowing air out is sometimes referred to as a "time of non-blowing".

In the present specification, a balance between an amount of energy consumption reduced by air lubrication and an amount of energy used for air lubrication is referred to as an "energy balance". A case in which the amount of reduced energy consumption is higher than the amount of energy usage is referred to as a "good" or "positive" energy balance. A case in which the amount of energy usage is higher than the amount of reduced energy consumption is referred to as a "no-good" or "negative" energy balance. An expression used when the energy balance is good is that an air lubrication effect is produced properly. An expression used when the energy balance gets better is "improve". An amount of fuel consumption can be converted into an amount of energy consumption by multiplying the amount of fuel consumption by a predetermined factor.

First, an outline of a control device according to the present invention will be described. A control device according to the present invention includes an air bubble controller configured to control a blow mechanism designed to blow an air bubble out through an air outlet formed in a hull. The air bubble controller starts blowing the air bubble outward or increases an amount of the air bubble blown outward when hull resistance of the hull satisfies a predetermined condition. According to this configuration, an air lubrication effect can be controlled depending on whether or not the predetermined condition is satisfied.

According to the invention, the control device includes a resistance calculator configured to calculate the hull resistance of the hull. The air bubble controller may start blowing the air bubble outward or increase the amount of the air bubble blown outward when the hull resistance calculated by the resistance calculator is higher than a reference value. In this case, the air lubrication effect can be used when the hull resistance is high. The hull resistance calculated by the resistance calculator may be actual hull resistance or assumed hull resistance.

According to the invention, the control device calculates the hull resistance based on at least one of a ship velocity of the hull, information on weather and oceanic conditions the hull is confronting, a draft of the hull, and a rudder angle of the hull. In this case, the hull resistance can be calculated with increased accuracy.

According to the invention, the hull includes a main engine to cause a propeller to rotate, and the resistance calculator calculates the hull resistance based further on an output from the main engine at present. In this case, the hull resistance can be calculated with further increased accuracy.

In one example, the air bubble controller may include a determinator to determine the reference value based on information about frictional resistance of the hull to water, in which the frictional resistance is set in advance concerning the hull. In this case, the reference value compatible with a characteristic of the hull can be determined.

The hull includes a main engine to cause a propeller to rotate, and the determinator may determine the reference value based further on at least one of an output from the main engine, an amount of fuel consumed by the main engine, and an amount of energy used by the blow mechanism. In this case, the reference value can be determined with increased accuracy using these items of information.

In one example, the determinator may determine the reference value based further on a draft of the hull at present. In this case, influence of the draft can be diminished.

In one example, the determinator may determine the reference value based further on a relationship between an amount of air blown out by the blow mechanism and an amount of energy used by the blow mechanism according to the draft. In this case, influence of the draft can be further diminished.

In one example, the determinator may determine the reference value based further on a relationship between an amount of fuel consumed by a main engine and an output from the main engine. In this case, influence of a worn component of the main engine can be diminished.

In one example, the air bubble controller may stop blowing the air bubble outward or decrease the amount of the air bubble blown outward when the hull resistance calculated by the resistance calculator is lower than a second reference value. In this case, the air bubble controller can control the air bubble such as stopping the air bubble in a timely manner.

In one example, the control device may determine the second reference value based on an amount of energy used by the blow mechanism at present. In this case, the control device can determine the second reference value according to the amount of energy usage at present.

In one example, the air bubble controller may increase or decrease the amount of the air bubble blown outward depending on a draft of the hull at present. In this case, the control device can determine the energy balance according to a change in the draft.

In one example, the control device may further include a transmitter to send out information about a status of the air bubble blown out by the blow mechanism. In this case, the control device can inform an operator of the status of the blown air bubble.

In one example, the control device may further include: a first calculator to calculate an energy reduction amount that is an amount of energy consumption reduced when the air bubble is blown out by the blow mechanism; and a second calculator to calculate an energy usage amount that is an amount of energy consumed to operate the blow mechanism, the energy reduction amount and the energy usage amount being calculated based on a ship velocity of the hull at present. The air bubble controller may start blowing the air bubble outward or increase the amount of the air bubble blown outward when the energy reduction amount calculated by the first calculator is larger than the energy usage amount calculated by the second calculator. In this case, the control device determines the energy balance using an energy reduction amount for the main engine and an energy usage amount for the blow mechanism. This provides improved determination accuracy.

In one example, the hull may include a main engine to cause a propeller to rotate. The first calculator may include: a reduction ratio calculator to calculate a fuel consumption reduction ratio according to the ship velocity and a draft of the hull; and a fuel consumption calculator to calculate a current fuel consumption amount of the main engine according to a current rotation rate of the main engine and a fuel supply status for the main engine. The first calculator may calculate the energy reduction amount according to the calculated fuel consumption reduction ratio and the current fuel consumption amount. In this case, the first calculator calculates the energy reduction amount according to the fuel consumption reduction ratio and the current fuel consumption amount. This helps to reduce calculation errors.

In one example, the blow mechanism may include: an engine; a power generator driven by the engine; and a compressor to compress air by electricity generated by the power generator and supply the compressed air to the air outlet. The second calculator may calculate the energy usage amount based on any one of an amount of fuel supplied to the engine, electricity generated by the power generator, and electricity used to drive the compressor. The control device, based on these items of information, may further perform a calculation: electricity used to drive the compressor/power generation efficiency of the power generator/efficiency of the engine = amounts of fuel consumed by the power generator and the engine that are necessary for the compressor to produce compressed air. In this case, the control device provides improve accuracy with which the energy usage amount is calculated.

Hereinafter, the present invention will be described based on preferred embodiments with reference to the drawings. Identical reference marks are assigned to identical or equivalent components and members shown in the embodiments and modification examples, and the repeated description thereof is omitted as appropriate. In the drawings, the dimensions of members are scaled up or down as appropriate to facilitate understanding. In the drawings, illustration of members that are not essential for a description of the embodiments is partly omitted.

For separate components that have a common feature, ordinal numerals such as "first and second" are added to the beginning parts of names of these components to distinguish them from each other, and these ordinal numerals are omitted when the components are correctively referred to as their names. Terms that have ordinal numerals such as first and second are used to describe a variety of components. These terms are only used to distinguish one component from the other components and should not be construed to limit these components.

In embodiments disclosed in the present specification, a part that consists of several elements may be altered into a part such that the several elements of the part are integrated together. Conversely, a part that consists of a single element can consist of separate elements. Regardless of whether the elements are integrated or not, the part is satisfactory as long as the part is configured so as to attain the object of the invention.

In embodiments disclosed in the present specification, a part whose several functions are distributed may be altered into a part such that the several functions are partly or wholly converged. Conversely, a part whose several functions are converged can be altered into a part such that the several functions are partly or wholly distributed. Regardless of whether the functions are converged or distributed, the part is satisfactory as long as the part is configured so as to attain the object of the invention.

### First Embodiment

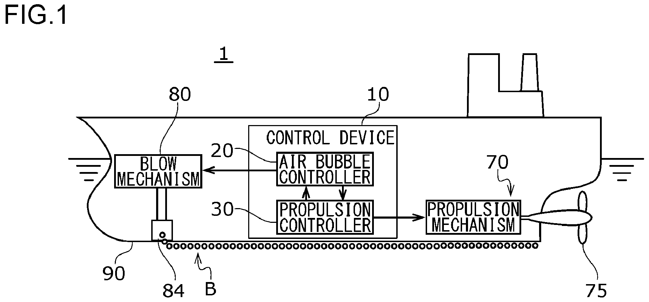

A control device 10 according to a first embodiment of the present invention will now be described with reference to the drawings. Fig. 1 is a schematic view showing a ship 1 to which the control device 10 according to the present invention is applied. In the present embodiment, the ship 1 includes a hull 90, the control device 10, a propulsion mechanism 70, and a blow mechanism 80. The propulsion mechanism 70 is a mechanism designed to generate propulsive force with which the hull 90 is propelled. The blow mechanism 80 constitutes an air lubricating mechanism that blows an air bubble B out through an air outlet 84 formed, for example, in a ship bottom of the hull 90 to produce an air lubrication effect with which resistance of the hull is reduced.

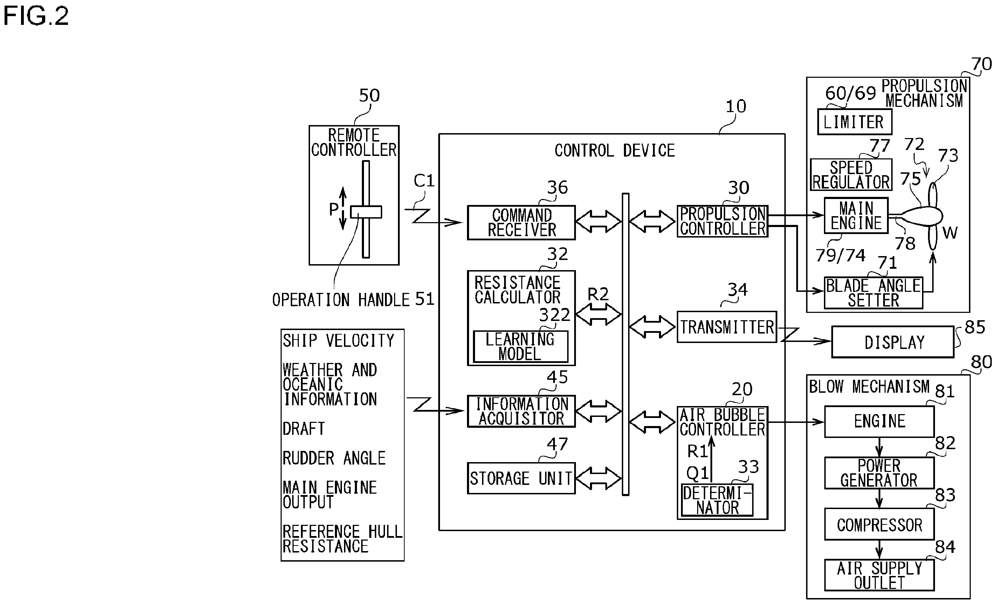

Fig. 2 is a schematic block diagram showing the control device 10 according to the present embodiment. The blocks shown in Fig. 2 and other block diagrams described later are implemented by any of devices, electronic circuits, and mechanisms such as computer processors, CPUs, and memory in terms of hardware and by any of computer programs and applications in terms of software. The drawings shown herein illustrate functional blocks implemented through coordination of these components. Thus, it will be understood by those skilled in the art that these functional blocks can be implemented in various forms by combinations of the hardware and software.

The control device 10 includes an air bubble controller 20, a propulsion controller 30, a command receiver 36, a resistance calculator 32, a transmitter 34, an information acquisitor 45, and a storage unit 47. The air bubble controller 20 controls the blow mechanism 80, which blows the air bubble B out through the air outlet 84 formed in the hull 90. The propulsion controller 30 controls propulsive force generated by the propulsion mechanism 70 to propel the hull 90. The command receiver 36 receives a command signal sent to instruct the propulsion mechanism 70 on a size of the propulsive force. The information acquisitor 45 acquires input data of various kinds described later. The storage unit 47 chronologically stores the acquired input data of various kinds and stores reference values or threshold values described later. The resistance calculator 32 and the transmitter 34 are described later.

In the control device 10, one of the propulsion controller 30 and the air bubble controller 20 may be controlled in response to a state in which another of propulsion controller 30 and the air bubble controller 20 is controlled. This enables the blow mechanism 80 and the propulsion mechanism 70 to work in cooperation with each other and thus helps to improve an energy balance of the hull 90.

### Propulsion mechanism

The propulsion mechanism 70 may be any mechanism as long as the mechanism can propel the hull 90. In the present embodiment, the propulsion mechanism 70 includes a diesel engine (hereinafter referred to as a "main engine 74") acting as a prime motor 79, and the main engine 74 causes a propeller 75 to rotate and generate propulsive force. The propulsion mechanism 70 consumes an amount of fuel according to a rotation rate and torque of the main engine 74 to run the main engine 74. The propulsion mechanism 70 includes a speed regulator 77 to suppress a variation in rotation rate of the main engine 74. The speed regulator 77 is also known as a governor. When the rotation rate of the main engine 74 changes in response to a variation in load, the speed regulator 77 regulates a quantity of supplied fuel to lessen the rotation rate change.

### Propulsion controller

The propulsion controller 30 controls the main engine 74. Based on an operation input to a controller device (hereinafter referred to as a "remote controller 50") that is installed in a bridge or another part of the ship 1 to remotely control the main engine 74, the propulsion controller 30 of the present embodiment is designed to control the main engine 74, such as increasing or decreasing the rotation rate and stopping the main engine. The remote controller 50 has an operation handle 51 that is used as an operation part to instruct the propulsion mechanism 70 on the size of the propulsive force. The remote controller 50 sends the control device 10 a command signal C1 to instruct the control device on the size of the propulsive force in response to a position of the operation handle 51 (hereinafter referred to as a "handle position P"). The handle position P serves as an example of an operational state of the operation part.

The operation handle may be structured in any form with proviso that the operation handle allows an operator to input an operation to the controller device. For instance, the operation handle may include or may not include a movable operation part. For instance, the operation handle may be designed to detect a command by a touched place on a touch panel.

In the present embodiment, the control device 10 includes the command receiver 36 to receive the command signal C1. The propulsion controller 30 alters propulsive force generated by the propulsion mechanism 70 based on the command signal C1 received by the command receiver 36. By changing the position of the operation handle 51 on the remote controller 50, the operator can alter the propulsive force of the propulsion mechanism 70 within a predetermined range that includes zero, headway, and sternway.

### Blow mechanism

The blow mechanism 80 is a mechanism that blows the air bubble B out into the water during sailing through the air outlet 84 formed, for example, in the ship bottom of the hull 90. Since the hull 90 is partly covered with an air layer that is formed by the air bubble B blown out through the air outlet 84, the hull resistance is reduced. In the present embodiment, the blow mechanism 80 includes an engine 81 to drive a power generator 82 and a compressor 83 driven on electricity generated by the power generator 82.

### Air bubble controller

By blowing the air bubble B outward and thereby reducing the resistance of the hull, energy consumed by the propulsion mechanism 70 can be reduced. However, this concurrently consumes energy in blowing the air bubble outward. Thus, it is important to blow the air bubble B outward in consideration of a balance between a decrease in consumed energy and an increase in consumed energy. As a result, it is preferable to control the blow mechanism 80 depending on whether a predetermined condition related to the balance on consumed energy is satisfied. Accordingly, the air bubble controller 20 of the present embodiment, when the predetermined condition is satisfied, controls the blow mechanism 80 so as to start blowing the air bubble B outward or increase an amount of the air bubble B blown outward. In other words, the air bubble B is blown outward when the air lubrication effect is properly produced.

Energy consumption by the blow mechanism 80 of the present embodiment will be described. The air bubble controller 20 controls the blow mechanism 80 to switch between a state in which the engine 81, the power generator 82, and the compressor 83 operate to blow the air bubble B outward and a state in which the engine 81 is stopped and the air bubble B is not blown outward. The blow mechanism 80 consumes a predetermined amount of fuel to operate the engine 81 during a time of blowing. A quantity into which the amount of the consumed fuel is converted by being multiplied by a predetermined factor is hereinafter referred to as an amount of energy used by the blow mechanism 80.

In the present embodiment, the propulsion mechanism 70 includes the main engine 74 to cause the propeller 75 to rotate. The propeller 75 is not limited in configuration and may be a fixed-pitch propeller or a variable-pitch propeller, for example. In this example, the propeller 75 is a variable-pitch propeller 72 that changes a blade angle W of a propeller blade 73 in response to a blade angle command from the propulsion controller 30. The variable-pitch propeller 72 includes a blade angle setter 71 to change the blade angle W in response to control from the propulsion controller 30. The blade angle setter 71 detects an actual blade angle at present (hereinafter referred to as an "actual blade angle W2", executes feedback control using the actual blade angle W2, and implements the blade angle W in accordance with the blade angle command (hereinafter referred to as a "target blade angle W1".

With the variable-pitch propeller 72, the propulsive force by the propulsion mechanism 70 can be altered by changing the blade angle W while running the main engine 74 at a constant rotation rate. An amount of fuel consumed by the main engine 74 can be cut down if the main engine is run at a rotation rate that provides relatively low fuel consumption.

In the propulsion controller 30 of this example, a relationship established between a rotation rate command for the main engine 74 (hereinafter referred to as a "target rotation rate N1") and the blade angle command for the propeller blade 73 so as to correspond to the handle position P of the operation handle 51 on the remote controller 50 is set as a combinator curve in advance. In one example, the combinator curve defines the relationship between the target rotation rate N1 and the target blade angle W1 with respect to each handle position P of the operation handle 51, such as target rotation rate N1 = 80 rpm and target blade angle W1 = 0 deg when the handle position P is STOP; and target rotation rate N1 = 120 rpm and target blade angle W1 = 25 deg when the handle position P is N/FMAX.

The propulsion controller 30 also has control to mitigate influence of a sudden blade angle shift and change the target blade angle W1 at a predetermined rate (hereinafter referred to as a "CPP blade angle change rate") when the handle is suddenly operated.

The propulsion mechanism 70 includes a limiter 60 to protect the main engine 74 by executing limier control. The limiter 60 can be equipped with a limiter mechanism based on various principles. In the present embodiment, the limiter 60 includes an ALC limiter 69 to protect the main engine 74 from overload by executing limiter control. The ALC limiter 69 automatically lowers an output from the main engine 74 when an actual load on the main engine 74 at present (hereinafter referred to as an "actual load" exceeds a predetermined target load.

The ALC limiter 69 of the present embodiment compares the target load for the main engine 74 with the actual load. When the main engine is in a state in which the actual load is higher than the target load (hereinafter referred to as an "overload state", the ALC limiter 69 executes control to decrease the blade angle of the propeller blade 73 (hereinafter referred to as ALC control (automatic load control)". By decreasing the blade angle through ALC control, the limiter prevents the main engine 74 from being overloaded.

An example of the predetermined condition will be described. When the hull resistance is low, an effect of consumed energy reduction caused by the air lubrication effect is relatively low and the energy balance is no good. Hence, it is preferable to use the air lubrication effect when actual hull resistance R2 is high. Accordingly, in the present embodiment, the control device includes the resistance calculator 32 to calculate the actual hull resistance R2 of the hull 90. The air bubble controller 20 is designed to start blowing the air bubble B outward or increase the amount of the air bubble B blown outward when the actual hull resistance R2 calculated by the resistance calculator 32 is higher than a reference value R1.

It is conceivable that the actual hull resistance R2 changes depending on conditions including a ship velocity, weather and oceanic information, a draft, and a rudder angle. The information on weather and oceanic conditions is information about tides, wind, and courses, for example. Thus, in terms of improvement of calculation accuracy, it is preferable to calculate the actual hull resistance with these conditions taken into account. Accordingly, in the present embodiment, the resistance calculator 32 calculates the actual hull resistance R2 based on at least one of the ship velocity of the hull 90, the information on weather and oceanic conditions the hull 90 is confronting, the draft of the hull 90, and the rudder angle of the hull 90. The ship velocity, the information on weather and oceanic conditions, the draft, and the rudder angle of the hull 90 are sometimes collectively referred to as hull environmental information. The information on weather and oceanic conditions may be visually determined by the operator and may be input to the control device 10.

The resistance calculator 32 may include a machine learning model 322 that gathers input data about the ship velocity, the weather and oceanic information, the draft, and the rudder angle and outputs the actual hull resistance R2. In one example, the machine learning model 322 can be implemented by machine learning (supervised learning) by which the ship velocity, the weather and oceanic information, the draft, and the rudder angle measured in testing of the ship at sea or during sailing are gathered as input objects and outputs of the actual hull resistance R2 are learned. The resistance calculator 32 may calculate the actual hull resistance R2 by going through a process of referring to a table of the ship velocity, the weather and oceanic information, the draft, and the rudder angle that is compiled in advance. The resistance calculator 32 may be designed to calculate the actual hull resistance R2 with information about hull contamination such as the attachment of a barnacle taken into account.

In terms of improvement of accuracy with which the actual hull resistance R2 is calculated, it is preferable to calculate the actual hull resistance with the output from the main engine 74 at present (hereinafter sometimes referred to as an "actual output") taken into account. Accordingly, in the present embodiment, the resistance calculator 32 calculates the actual hull resistance R2 based further on the output from the main engine 74 at present. The output from the main engine 74 may be the rotation rate of the main engine 74, output torque of the main engine 74, or shaft horsepower (dynamic power acting on a propulsion shaft 78) calculated from the rotation rate and the output torque. The output from the main engine 74 at present can be acquired by acquisition mean based on a known principle.

In terms of improvement of calculation accuracy for the resistance calculator 32, it is preferable to use the reference value R1 compatible with a characteristic of each individual of the hull 90. Accordingly, in the present embodiment, the control device includes a determinator 33 to determine the reference value R1 based on information about frictional resistance of the hull to the water that is set in advance concerning the hull 90. In one example, information about this frictional resistance is preset frictional resistance of the hull to the water (hereinafter referred to as "reference hull resistance"). In Fig. 2, the determinator 33 is disposed in the air bubble controller 20, for example. However, the determinator 33 may be disposed in any part other than the air bubble controller. The reference hull resistance may be a reference resistance value that is set concerning a target hull according to design or a reference resistance value that is measured in a test of the ship at sea or during sailing.

The determinator 33 may determine the reference value R1 by going through a process of referring to a table of the characteristic of each individual of the hull 90 that is compiled in advance. The characteristic of each individual of the hull 90 may be a characteristic determined according to design or a characteristic measured concerning each individual of the hull 90 in a test of the ship at sea or during sailing.

In terms of improvement of calculation accuracy for the resistance calculator 32, it is preferable to use the reference value R1 compatible with a parameter that is likely to influence the calculation accuracy. Such a parameter is the output from the main engine 74, the amount of fuel consumed by the main engine 74, and the amount of energy used by the blow mechanism 80, for example. Accordingly, in the present embodiment, the determinator 33 determines the reference value R1 based further on at least one of the output from the main engine 74, the amount of fuel consumed by the main engine 74, and the amount of energy used by the blow mechanism 80.

In response to a change in the draft of the hull 90, the amount of energy used by the blow mechanism 80 changes and the calculation accuracy is likely to decrease. Thus, it is preferable to acquire a change in the draft of the hull 90 and use the reference value R1 compatible with the acquired draft change. Accordingly, in the present embodiment, the determinator 33 determines the reference value R1 based further on the draft of the hull 90 at present. In the present embodiment, determining a value includes determining a value for the first time if no value is determined previously as well as updating a value if the value is determined previously.

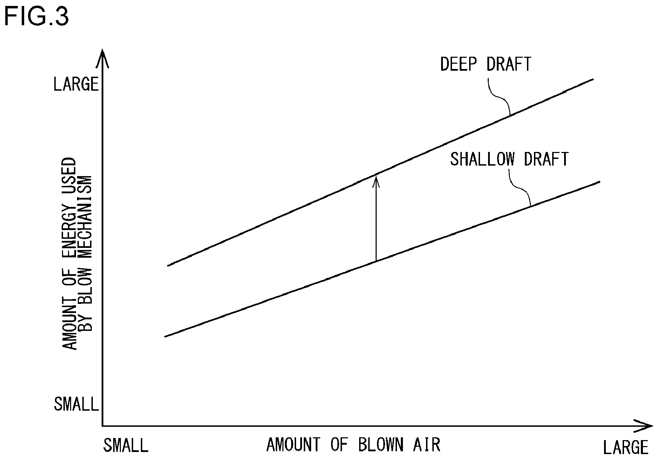

When the draft of the hull 90 gets deeper, a depth of the water at which the air outlet 84 is located increases and water pressure applied to the air outlet from the seawater rises. When the water pressure surrounding the air outlet 84 rises, the amount of energy used by the blow mechanism 80 to blow an identical quantity of air outward increases. Fig. 3 is a graph schematically showing an example of a relationship between the amount of air blown out by the blow mechanism 80 and the amount of energy used by the blow mechanism 80. As shown in the graph, the relationship between the amount of the blown air and the amount of energy used by the blow mechanism 80 changes depending on the draft of the hull 90. If the amount of the blown air is the same, the amount of energy used is large for a deep draft compared to a shallow draft.

Thus, it is preferable to acquire the draft of the hull 90 and use the reference value R1 compatible with the acquired draft. Accordingly, in the present embodiment, the determinator 33 determines the reference value R1 based further on the relationship between the amount of the blown air and the amount of energy used by the blow mechanism 80 according to the draft.

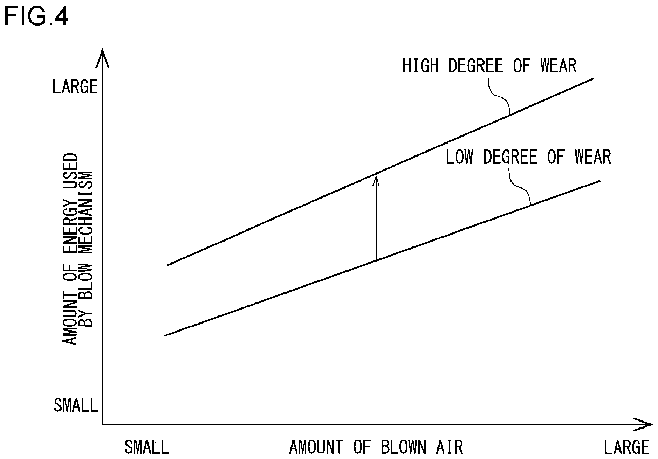

If a component of the blow mechanism 80 is worn, the amount of air blown out by the blow mechanism 80 decreases, and the amount of energy used by the blow mechanism to blow an identical quantity of air outward increases. Fig. 4 is a graph schematically showing an example of a relationship between the amount of air blown out by the blow mechanism 80 and the amount of energy used by the blow mechanism 80. As shown in the graph, the relationship between the amount of the blown air and the amount of energy used by the blow mechanism 80 changes depending on wear sustained by the component of the blow mechanism 80. If the amount of the blown air is the same, the amount of energy used is large for a high degree of wear sustained by the component compared to a low degree of wear.

Thus, it is preferable to acquire a condition of wear sustained by the component of the blow mechanism 80 and use the reference value R1 compatible with the acquired wear condition. Accordingly, in the present embodiment, the determinator 33 determines the reference value R1 based further on the relationship between the amount of the blown air and the amount of energy used by the blow mechanism 80 according to the condition of wear sustained by the component of the blow mechanism 80.

In one example, the condition of wear sustained by the component of the blow mechanism 80 may be a ratio of a period of use of a target component to a predetermined life span of the target component. When the period of use is relatively short, the degree of wear is low. A long period of use is regarded as a high degree of wear. In other words, the wear condition may be identified as a parameter depending on a past operating period of the blow mechanism 80. The condition of wear sustained by the component may be identified based on information acquired from the blow mechanism 80 in a test of the ship at sea or during sailing.

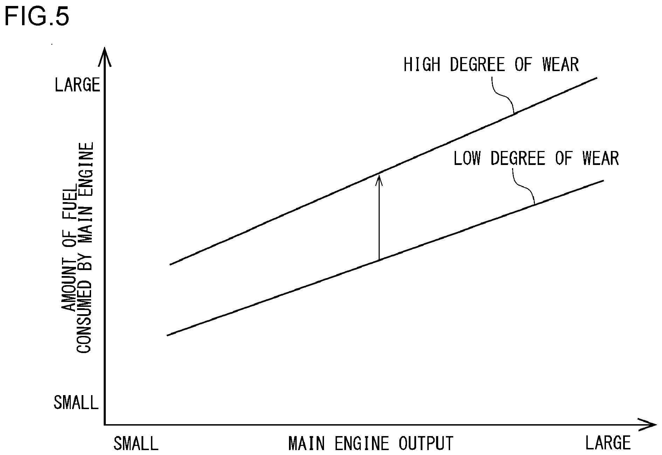

If a component of the main engine 74 is worn, the output from the main engine 74 decreases, and the amount of fuel consumed by the main engine to produce an identical level of output increases. Fig. 5 is a graph schematically showing an example of a relationship between the output from the main engine 74 and the amount of fuel consumed by the main engine. As shown in the graph, the relationship between the output from the main engine 74 and the amount of fuel consumed by the main engine 74 changes depending on wear sustained by the component of the main engine 74. If the output is the same, the amount of fuel consumption is large for a high degree of wear sustained by the component compared to a low degree of wear.

Thus, it is preferable to acquire a condition of wear sustained by the component of the main engine 74 and use the reference value R1 compatible with the acquired wear condition. Accordingly, in the present embodiment, the determinator 33 determines the reference value R1 based further on the relationship between the amount of fuel consumed by the main engine 74 and the output from the main engine 74.

In one example, the condition of wear sustained by the component of the main engine 74 may be a ratio of a period of use of a target component to a predetermined life span of the target component. When the period of use is relatively short, the degree of wear is low. A long period of use is regarded as a high degree of wear. The condition of wear sustained by the component may be identified based on information acquired from the main engine 74 in a test of the ship at sea or during sailing.

If the hull resistance decreases while the air bubble B is blown outward, the effect of consumed energy reduction diminishes and the energy balance deteriorates. Hence, it is preferable to decrease the air bubble B blown outward in response to a decrease in hull resistance. Accordingly, in the present embodiment, the air bubble controller 20 is designed to stop blowing the air bubble B outward or decrease the amount of the air bubble B blown outward when the actual hull resistance R2 calculated by the resistance calculator 32 is lower than a second reference value Q1.

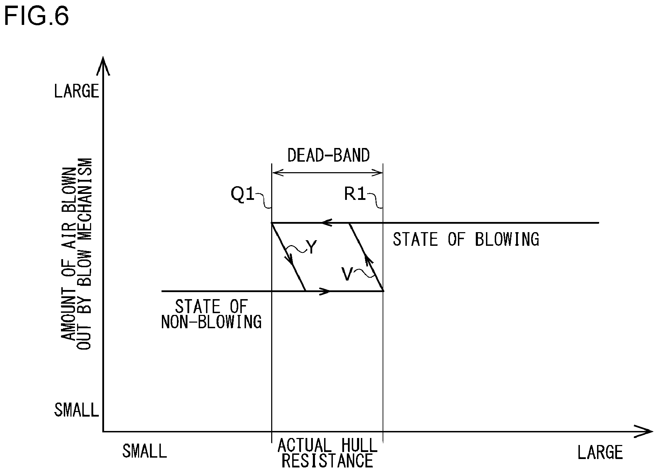

Fig. 6 is a graph schematically showing an example of a relationship between the amount of air blown out by the blow mechanism 80 and resistance of the hull.

As shown in the graph, when the actual hull resistance R2 gradually increases and reaches the reference value R1 with the blow mechanism 80 being in a state of non-blowing, the blow mechanism 80 gets into a state of blowing as indicated by an arrow V. When the actual hull resistance R2 gradually decreases and reaches the second reference value Q1 with the blow mechanism 80 being in a state of blowing, the blow mechanism 80 gets into a state of non-blowing as indicated by an arrow Y.

As shown in Fig. 6, a dead-band is provided between the second reference value Q1 and the reference value R1. If such a dead-band is not provided, the blow mechanism 80 repeats start and stop in a short period of time and there is a risk that the amount of energy used by the blow mechanism 80 increases and the blow mechanism 80 deteriorates at an accelerated rate. Thus, in terms of avoidance of start and stop in a short period of time, the second reference value Q1 is set to a value smaller than the reference value R1 by a predetermined dead-band size. The predetermined dead-band size can be determined by simulation or experiment.

In terms of improvement of calculation accuracy for the resistance calculator 32, actual energy balance is important. Thus, it is preferable to acquire the amount of energy used by the blow mechanism 80 at present and use the second reference value Q1 compatible with the acquired present energy usage amount. Accordingly, in the present embodiment, the determinator 33 determines the second reference value Q1 based on the amount of energy used by the blow mechanism 80 at present. The present amount of energy used by the blow mechanism 80 can be acquired based on any of an amount of fuel consumed by the engine 81, electricity generated by the power generator 82, and electricity used to drive the compressor 83. The second reference value Q1 may be determined by an element other than the determinator 33.

As described above, the amount of energy used by the blow mechanism 80 increases or decreases depending on the draft of the hull 90. In other words, a trade-off point for the energy balance changes according to the draft. Accordingly, in the present embodiment, the air bubble controller 20 is designed to increase or decrease the amount of the air bubble B blown outward depending on the draft of the hull 90 at present. For instance, the amount of the air bubble B blown outward may decrease when the draft is deep and may increase when the draft is shallow, or vice versa.

Preferably, the operator can operate the ship according to a status of the blown air bubble B. Accordingly, in the present embodiment, the control device further includes the transmitter 34 to send out information about the status of the air bubble blown out by the blow mechanism 80. In Fig. 2, to inform the operator of the status of the blown air bubble B, the transmitter 34 sends information about the status of the blown air bubble to a display 85 outside to show the sent information, for example.

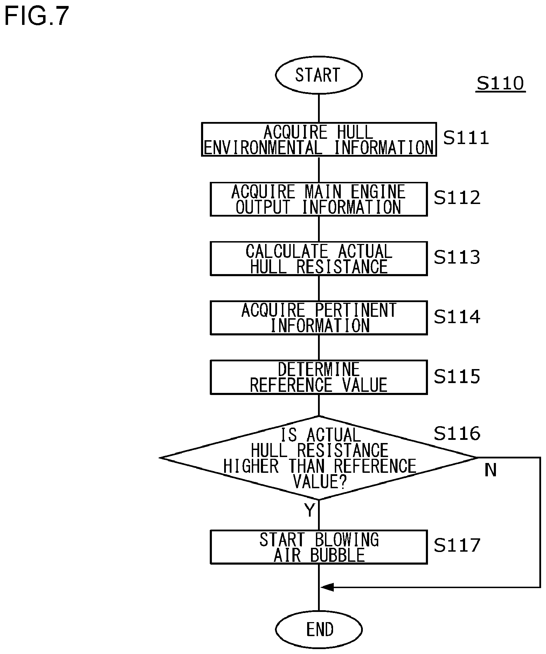

A process S110 executed by the control device 10 of the present embodiment configured as described above will be described. Fig. 7 is a flowchart showing the process S110 executed by the control device 10.

When the process S110 starts, the control device 10 acquires at least one of pieces of the hull environmental information made up of the ship velocity, the information on weather and oceanic conditions, the draft, and the rudder angle of the hull 90 (step S111).

Following the execution of step S111, the control device 10 acquires the output from the main engine 74 (step S112).

Following the execution of step S112, the control device 10 calculates the actual hull resistance R2 based on the acquired hull environmental information and the output (step S113).

Following the execution of step S113, the control device 10 acquires at least one of pieces of pertinent information made up of the output from the main engine 74, the amount of fuel consumed by the main engine 74, and the amount of energy used by the blow mechanism 80 (step S114).

Following the execution of step S114, the control device 10 determines the reference value R1 based on the pertinent information acquired in step S114 (step S115).

Following the execution of step S115, the control device 10 determines whether or not the actual hull resistance R2 is higher than the reference value R1 (step S116).

If the actual hull resistance R2 is less than or equal to the reference value R1 (N in step S116), the control device 10 ends the process S110.

If the actual hull resistance R2 is higher than the reference value R1 (Y in step S116), the control device 10 starts blowing the air bubble B outward or increase the amount of the air bubble B blown outward (step S117).

Following the execution of step S117, the process S110 ends. The steps described above are merely steps in one example, and various modifications can be made.

The first embodiment has been described above.

Second to fourth embodiments of the present invention will be described below. In drawings and descriptions shown in the second to the fourth embodiments, identical reference marks are assigned to components and members identical or equivalent to those in the first embodiment. Descriptions shared with the first embodiment are omitted as appropriate, and components different from those in the first embodiment will be primarily described.

### Second Embodiment

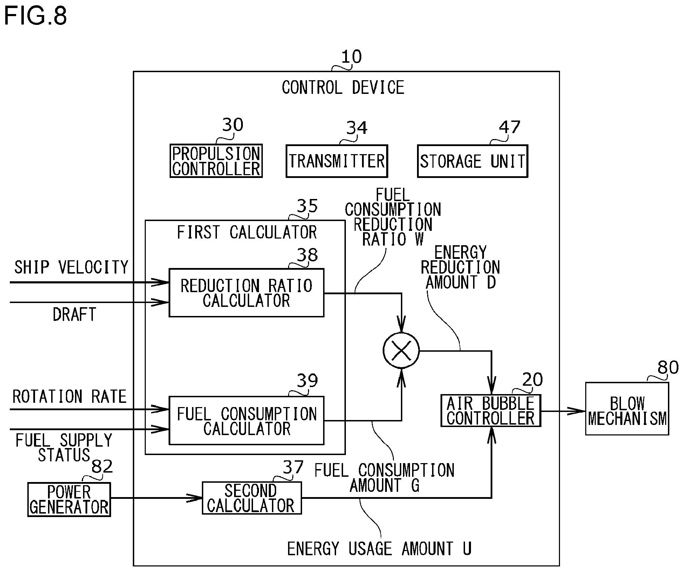

With reference to Fig. 8, a control device 10 according to the second embodiment of the present invention will now be described. Fig. 8 is a schematic block diagram showing the control device 10 according to the present embodiment. As shown in the diagram, the present embodiment differs from the first embodiment in that the control device 10 of the present embodiment includes a first calculator 35, a second calculator 37, a reduction ratio calculator 38, and a fuel consumption calculator 39. Thus, these points of difference will be primarily described.

It is important to improve accuracy with which the energy balance is determined. For improved determination accuracy, it is preferable to determine the energy balance using an energy reduction amount D for the main engine 74 and an energy usage amount U for the blow mechanism 80.

Hence, in the present embodiment, the control device further includes the first calculator 35 to calculate the energy reduction amount D, an amount of energy consumption reduced when the air bubble B is blown out by the blow mechanism 80, and the second calculator 37 to calculate the energy usage amount U, an amount of energy consumed to operate the blow mechanism 80, based on the ship velocity of the hull 90 at present.

The air bubble controller 20 is designed to start blowing the air bubble B outward or increase the amount of the air bubble B blown outward when the energy reduction amount D calculated by the first calculator 35 is larger than the energy usage amount U calculated by the second calculator 37.

In terms of reduction of calculation errors, it is preferable to estimate a fuel consumption reduction ratio W that is a reduction rate represented by a ratio between amounts of the fuel consumed by the main engine 74 at a time of blowing and at a time of non-blowing and calculate the energy reduction amount D using the fuel consumption reduction ratio W and a current fuel consumption amount G.

The fuel consumption reduction ratio W varies with the ship velocity and the draft of the hull 90. Hence, in the present embodiment, the first calculator 35 includes the reduction ratio calculator 38 to calculate the fuel consumption reduction ratio W according to the ship velocity and the draft of the hull 90 and the fuel consumption calculator 39 to calculate the current fuel consumption amount G of the main engine 74 according to a current rotation rate of the main engine 74 (hereinafter referred to as a "rotation rate N2") and a fuel supply status F for the main engine 74. In one example, the first calculator 35 can calculate the fuel consumption reduction ratio W by going through a process of referring to a table of the ship velocity and the draft of the hull 90 that is compiled in advance.

The fuel supply status F may be a command value indicating a supply of the fuel to the main engine 74. In one example, the fuel supply status F for the main engine 74 can be acquired from the speed regulator 77. In this example, the speed regulator 77 includes a rack and pinion (not shown) and is designed to supply the main engine 74 with an amount of the fuel depending on a position of the rack. Thus, the fuel supply status F can be identified based on the rack position.

The air bubble controller 20 is designed to calculate the energy reduction amount D according to the fuel consumption reduction ratio W calculated by the reduction ratio calculator 38 and the current fuel consumption amount G calculated by the fuel consumption calculator 39. For instance, the air bubble controller is able to calculate the energy reduction amount D by obtaining a result of multiplication of the fuel consumption reduction ratio W and the current fuel consumption amount G and multiplying the obtained result by a predetermined factor. The energy reduction amount D may be calculated by going through a process of referring to a table of the fuel consumption reduction ratio W and the current fuel consumption amount G that is compiled in advance.

In terms of reduction of calculation errors, it is preferable to calculate the energy usage amount U based on the amount of the fuel, generated electricity, or electricity used to drive the compressor. Accordingly, in the present embodiment, the second calculator 37 calculates the energy usage amount U based on any one of the amount of the fuel supplied to the engine 81, electricity generated by the power generator 82, and electricity used to drive the compressor 83. In one example, the second calculator 37 is able to calculate the energy usage amount U by multiplying any one of the amount of the fuel supplied to the engine 81, electricity generated by the power generator 82, and electricity used to drive the compressor 83 by a predetermined factor.

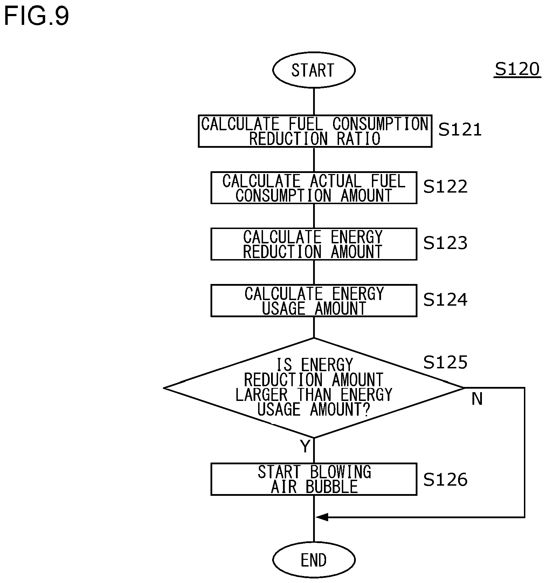

A process S120 executed by the control device 10 of the present embodiment configured as described above will be described. Fig. 9 is a flowchart showing the process S120 executed by the control device 10.

When the process S120 starts, the control device 10 acquires the ship velocity and the draft of the hull 90 to calculate the fuel consumption reduction ratio W according to the ship velocity and the draft (step S121).

Following the execution of step S121, the control device 10 acquires the rotation rate N2 of the main engine 74 and the fuel supply status F for the main engine 74 to calculate the current fuel consumption amount G of the main engine 74 according to the rotation rate N2 and the fuel supply status F (step S122).

Following the execution of step S122, the control device 10 calculates the energy reduction amount D based on the calculated fuel consumption reduction ratio W and the current fuel consumption amount G (step S123). In one example, the control device 10 can calculate the energy reduction amount D by multiplying the current fuel consumption amount G by the fuel consumption reduction ratio W to find an amount of reduced fuel consumption and multiplying the reduced fuel consumption amount by a predetermined factor.

Following the execution of step S123, the control device 10 calculates the energy usage amount U (step S124).

Following the execution of step S124, the control device 10 determines whether or not the energy reduction amount D is larger than the energy usage amount U (step S125). If the energy reduction amount D is less than or equal to the energy usage amount U (N in step S125), the control device 10 ends the process S120.

If the energy reduction amount D is larger than the energy usage amount U (Y in step S125), the control device 10 starts blowing the air bubble B outward or increase the amount of the air bubble B blown outward (step S126).

Following the execution of step S126, the process S120 ends. The steps described above are merely steps in one example, and various modifications can be made.

The second embodiment has been described above.

### Third Embodiment

A third embodiment of the present invention is a control method for the control device 10. The control method for the control device 10 that controls the blow mechanism 80 designed to blow the air bubble B out through the air outlet 84 formed in the hull 90 includes the step of starting blowing an air bubble outward or increasing an amount of the air bubble blown outward when a predetermined condition is satisfied.

The present embodiment produces action and an effect similar to those in the first embodiment.

### Fourth Embodiment

A fourth embodiment of the present invention is a control program 100 (a computer program) for the control device 10. The control program 100 for the control device 10 that controls the blow mechanism 80 designed to blow the air bubble B out through the air outlet 84 formed in the hull 90 causes a computer to execute the step of starting blowing an air bubble outward or increasing an amount of the air bubble blown outward when a predetermined condition is satisfied.

Such a function of the control program 100 may be installed, as an application program incorporating a plurality of modules corresponding to functional blocks of the control device 10, in storage (e.g., the storage unit 47) in the control device 10. The control program 100 may be read into main memory for a computer processor (e.g., a CPU) built in the control device 10 and be executed.

The present embodiment produces action and an effect similar to those in the first embodiment.

Example embodiments of the present invention have been described in detail above. Any of the embodiments described above are merely specific examples shown for implementing the present invention. The details of the embodiments should not be construed to limit the scope of the technique of the present invention. Various design changes such as structural modifications, additions and deletions may occur insofar as they are within the scope of the present invention as defined by the appended claims. In the embodiments described above, contents to which such design changes can be applied are described with expressions such as "of the embodiment" and "in the embodiment". This, however, should not be construed to preclude design changes to be applied to other contents without such expressions.

### Modification Examples

Modification examples will now be described. In drawings and descriptions shown in modification examples, identical reference marks are assigned to components and members identical or equivalent to those in the embodiments. Descriptions shared with the embodiments are omitted as appropriate, and components different from those in the embodiments will be primarily described.

In the description of the embodiments, the propulsion mechanism 70 has the prime motor 79 that causes the propeller 75 to rotate and generate propulsive force. However, the propulsion mechanism is not limited to this example. The propulsion mechanism may be any as long as the mechanism can propel the hull. The propulsion mechanism may be, for example, a mechanism designed to discharge a gas or a similar thing and thereby generate propulsive force by reaction.

In the description of the embodiments, the prime motor 79 is a diesel engine. However, the prime motor is not limited to this example. The prime motor may be, for example, an internal combustion engine, an external combustion engine, or an electric motor other than a diesel engine.

In terms of improvement of calculation accuracy, the resistance calculator 32 may calculate the actual hull resistance based on a combination of two, three, or four out of the ship velocity of the hull 90, information on weather and oceanic conditions the hull 90 is confronting, the draft of the hull 90, and the rudder angle of the hull 90.

In terms of appropriate determination of a reference value, the determinator 33 may determine the reference value based on a combination of two or three out of the output from the main engine 74, the amount of fuel consumed by the main engine 74, and the amount of energy used by the blow mechanism 80.

The modification examples described above produce action and effects similar to those in the embodiments.

Any combinations of the embodiments and modification examples described above can also be effective as embodiments of the present invention, which is defined by the appended claims.

## Claims

1. A control device (10) comprising
an air bubble controller (20) configured to control a blow mechanism (80) configured to blow an air bubble (B) out through an air outlet (84) formed in a hull (90), wherein
the hull (90) includes a main engine (74) configured to cause a propeller (75) to rotate; **characterized by**
a resistance calculator (32) configured to calculate a hull resistance of the hull (90), wherein
the resistance calculator (32) is configured to calculate the hull resistance based on at least one of a ship velocity of the hull (90), information on weather and oceanic conditions the hull (90) is confronting, a draft of the hull (90), and a rudder angle of the hull (90), and based further on an output from the main engine (74) at present, and
the air bubble controller (20) is configured to start blowing the air bubble (B) outward or to increase an amount of the air bubble (B) blown outward when the hull resistance calculated by the resistance calculator (32) is higher than a reference value (R1).

2. The control device (10) according to claim 1, wherein the air bubble controller (20) includes a determinator (33) configured to determine the reference value (R1) based on information about frictional resistance of the hull (90) to water, the frictional resistance being set in advance concerning the hull (90).

3. The control device (10) according to of claim 1 or 2, wherein
the air bubble controller (20) includes a determinator (33) configured to determine the reference value (R1) based further on at least one of an output from the main engine (74), an amount of fuel consumed by the main engine (74), and an amount of energy used by the blow mechanism (80).

4. The control device (10) according to any one of claims 1 to 3, wherein the air bubble controller (20) includes a determinator (33) configured to determine the reference value (R1) based further on a draft of the hull (90) at present.

5. The control device (10) according to claim 4, wherein the determinator (33) is configured to determine the reference value (R1) based further on a relationship between an amount of air blown out by the blow mechanism (80) and an amount of energy used by the blow mechanism (80) according to the draft.

6. The control device (10) according to any one of claims 1 to 5, wherein the air bubble controller (20) includes a determinator (33) configured to determine the reference value (R1) based further on a relationship between an amount of fuel consumed by a main engine (74) and an output from the main engine (74).

7. The control device (10) according to any one of claims 1 to 6, wherein the air bubble controller (20) is configured to stop blowing the air bubble (B) outward or to decrease the amount of the air bubble (B) blown outward when the hull resistance calculated by the resistance calculator (32) is lower than a second reference value (Q1).

8. The control device (10) according to claim 7, wherein the air bubble controller (20) is configured to determine the second reference (Q1) value based on an amount of energy used by the blow mechanism (80) at present.

9. The control device (10) according to any one of claims 1 to 8, wherein the air bubble controller (20) is configured to increase or to decrease the amount of the air bubble (B) blown outward depending on a draft of the hull (90) at present.

10. The control device (10) according to claim 1, further comprising:
a first calculator (35) configured to calculate an energy reduction amount that is an amount of energy consumption reduced when the air bubble (B) is blown out by the blow mechanism (80); and
a second calculator (37) configured to calculate an energy usage amount that is an amount of energy consumed to operate the blow mechanism (80), the energy reduction amount and the energy usage amount being calculated based on the ship velocity of the hull (90) at present, wherein
the air bubble controller (20) is configured to start blowing the air bubble (B) outward or to increase the amount of the air bubble (B) blown outward when the energy reduction amount calculated by the first calculator (35) is larger than the energy usage amount calculated by the second calculator (37).

11. The control device (10) according to claim 10, wherein
the first calculator (35) includes: a reduction ratio calculator (38) configured to calculate a fuel consumption reduction ratio according to the ship velocity and the draft of the hull (90); and a fuel consumption calculator (39) configured to calculate a current fuel consumption amount of the main engine (74) according to a current rotation rate of the main engine (74) and a fuel supply status for the main engine (74), and wherein the first calculator (35) is configured to calculate the energy reduction amount according to the calculated fuel consumption reduction ratio and the current fuel consumption amount.

12. The control device (10) according to claim 10 or 11, wherein the blow mechanism (80) includes: an engine (81); a power generator (82) driven by the engine (81); and a compressor (83) configured to compress air by electricity generated by the power generator (82) and to supply the compressed air to the air outlet (84), and
wherein the second calculator (37) is configured to calculate the energy usage amount based on any one of an amount of fuel supplied to the engine (81), electricity generated by the power generator (82), and electricity used to drive the compressor (83).

## Patentansprüche

1. Steuerungsvorrichtung (10), die umfasst:
eine Luftblasen-Steuerungseinrichtung (20), die so ausgeführt ist, dass sie einen Blasmechanismus (80) steuert, der so ausgeführt ist, dass er Luftblasen (B) über einen in einem Rumpf (90) ausgebildeten Luftauslass (84) ausbläst, wobei der Rumpf (90) einen Hauptmotor (74) enthält, der so ausgeführt ist, dass er einen Propeller (75) in Drehung versetzt;
**gekennzeichnet durch**
eine Widerstands-Berechnungseinrichtung (32), die so ausgeführt ist, dass sie einen Rumpfwiderstand des Rumpfes (90) berechnet, wobei
die Widerstands-Berechnungseinrichtung (32) so ausgeführt ist, dass sie den Rumpfwiderstand auf Basis einer Schiffsgeschwindigkeit des Rumpfes (90), Informationen über Wetter- und Seebedingungen, denen der Rumpf (90) ausgesetzt ist, eines Tiefgangs des Rumpfes (90) oder/und eines Ruderlagenwinkels des Rumpfes (90) sowie des Weiteren auf Basis einer aktuellen Ausgangsleistung des Hauptmotors (74) berechnet, und
die Luftblasen-Steuerungseinrichtung (20) so ausgeführt ist, dass sie beginnt, die Luftblasen (B) nach außen zu blasen oder eine nach außen geblasene Menge an Luftblasen (B) vergrößert, wenn der durch die Widerstands-Berechnungseinrichtung (32) berechnete Rumpfwiderstand über einem Bezugswert (R1) liegt.

2. Steuerungsvorrichtung (10) nach Anspruch 1, wobei die Luftblasen-Steuerungseinrichtung (20) eine Bestimmungseinrichtung (33) enthält, die so ausgeführt ist, dass sie den Bezugswert (R1) auf Basis von Informationen über einen Reibungswiderstand des Rumpfes (90) gegenüber Wasser bestimmt, wobei der Reibungswiderstand im Voraus in Bezug auf den Rumpf (90) festgelegt wird.

3. Steuerungsvorrichtung (10) nach Anspruch 1 oder 2, wobei
die Luftblasen-Steuerungseinrichtung (20) eine Bestimmungseinrichtung (33) enthält, die so ausgeführt ist, dass sie den Bezugswert (R1) des Weiteren basierend auf einer Ausgangsleistung des Hauptmotors (74), einer von dem Hauptmotor (74) verbrauchten Kraftstoffmenge oder/und einer von dem Blasmechanismus (80) verbrauchten Energiemenge bestimmt.

4. Steuerungsvorrichtung (10) nach einem der Ansprüche 1 bis 3, wobei die Luftblasen-Steuerungseinrichtung (20) eine Bestimmungseinrichtung (33) enthält, die so ausgeführt ist, dass sie den Bezugswert (R1) des Weiteren basierend auf einem aktuellen Tiefgang des Rumpfes (90) bestimmt.

5. Steuerungsvorrichtung (10) nach Anspruch 4, wobei die Bestimmungseinrichtung (33) so ausgeführt ist, dass sie den Bezugswert (R1) des Weiteren basierend auf einer Beziehung zwischen einer von dem Blasmechanismus (80) ausgeblasenen Luftmenge und einer von dem Blasmechanismus (80) entsprechend dem Tiefgang verbrauchten Energiemenge bestimmt.

6. Steuerungsvorrichtung (10) nach einem der Ansprüche 1 bis 5, wobei die Luftblasen-Steuerungseinrichtung (20) eine Bestimmungseinrichtung (33) enthält, die so ausgeführt ist, dass sie den Bezugswert (R1) des Weiteren basierend auf einer Beziehung zwischen einer von dem Hauptmotor (74) verbrauchte Kraftstoffmenge und einer Ausgangsleistung des Hauptmotors (74) bestimmt.

7. Steuerungsvorrichtung (10) nach einem der Ansprüche 1 bis 6, wobei die Luftblasen-Steuerungseinrichtung (20) so ausgeführt ist, dass sie Ausblasen der Luftblasen (B) unterbricht oder die ausgeblasene Menge an Luftblasen (B) verringert, wenn der von der Widerstands-Berechnungseinrichtung (32) berechnete Rumpfwiderstand unter einem zweiten Bezugswert (Q1) liegt.

8. Steuerungsvorrichtung (10) nach Anspruch 7, wobei die Luftblasen-Steuerungseinrichtung (20) des Weiteren so ausgeführt ist, dass sie den zweiten Bezugswert (Q1) auf Basis einer aktuell von dem Blasmechanismus (80) verbrauchten Energiemenge bestimmt.

9. Steuerungsvorrichtung (10) nach einem der Ansprüche 1 bis 8, wobei die Luftblasen-Steuerungseinrichtung (20) so ausgeführt ist, dass sie die ausgeblasene Menge an Luftblasen (B) in Abhängigkeit von einem aktuellen Tiefgang des Rumpfes (90) vergrößert oder verkleinert.

10. Steuerungsvorrichtung (10) nach Anspruch 1, die des Weiteren umfasst:
eine erste Berechnungseinrichtung (35), die so ausgeführt ist, dass sie ein Energie-Reduzierungsmaß berechnet, das ein Maß des Energieverbrauchs ist, der reduziert wird, wenn die Luftblasen (B) von dem Blasmechanismus (80) ausgeblasen werden; sowie
eine zweite Berechnungseinrichtung (37), die so ausgeführt ist, dass sie ein Energie-Verbrauchsmaß berechnet, das eine Energiemenge ist, die verbraucht wird, um den Blasmechanismus (80) zu betreiben, wobei das Energie-Reduzierungsmaß und das Energie-Verbrauchsmaß auf Basis der aktuellen Schiffsgeschwindigkeit des Rumpfes (90) berechnet werden, und wobei
die Luftblasen-Steuerungseinrichtung (20) so ausgeführt ist, dass sie beginnt, die Luftblasen (B) nach außen zu blasen oder die nach außen geblasene Menge an Luftblasen (B) vergrößert, wenn das durch die erste Berechnungseinrichtung (35) berechnete Energie-Reduzierungsmaß größer ist als das durch die zweite Berechnungseinrichtung (37) berechnete Energie-Verbrauchsmaß.

11. Steuerungsvorrichtung (10) nach Anspruch 10, wobei
die erste Berechnungseinrichtung (35) eine Reduzierungsverhältnis-Berechnungseinrichtung (38), die so ausgeführt ist, dass sie ein Kraftstoffverbrauch-Reduzierungsverhältnis entsprechend der Schiffsgeschwindigkeit sowie des Tiefgangs des Rumpfes (90) berechnet, und eine Kraftstoffverbrauch-Berechnungseinrichtung (39) enthält, die so ausgeführt ist, dass sie eine aktuelle Kraftstoffverbrauchs-Menge des Hauptmotors (74) entsprechend einer aktuellen Drehzahl des Hauptmotors (74) sowie eines Kraftstoffzufuhr-Status für den Hauptmotor (74) berechnet, und wobei die erste Berechnungseinrichtung (35) so ausgeführt ist, dass sie das Energie-Reduzierungsmaß entsprechend dem berechneten Kraftstoffverbrauch-Reduzierungsverhältnis und der aktuellen Kraftstoffverbrauchs-Menge berechnet.

12. Steuerungsvorrichtung (10) nach Anspruch 10 oder 11, wobei der Blasmechanismus (80) enthält:
einen Motor (81); eine Stromerzeugungseinrichtung (82), die von dem Motor (81) angetrieben wird; sowie einen Kompressor (83), der so ausgeführt ist, dass er Luft mittels von der Stromerzeugungseinrichtung (82) erzeugtem Strom komprimiert, und die komprimierte Luft dem Luftauslass (84) zuführt, und
wobei die zweite Berechnungseinrichtung (37) so ausgeführt ist, dass sie das Energie-Verbrauchsmaß auf Basis einer dem Motor (81) zugeführten Kraftstoffmenge, durch die Stromerzeugungseinrichtung (82) erzeugten Stroms und/oder zum Antreiben des Kompressors (83) verbrauchten Stroms berechnet.

## Revendications

1. Dispositif de contrôle (10) comprenant
un contrôleur de bulle d'air (20) configuré pour contrôler un mécanisme de soufflage (80) configuré pour souffler une bulle d'air (B) à travers une sortie d'air (84) formée dans une coque (90), dans lequel
la coque (90) comprend un moteur principal (74) configuré pour provoquer la rotation d'une hélice (75) ;
**caractérisé par**
un calculateur de résistance (32) configuré pour calculer une résistance de coque de la coque (90), dans lequel
le calculateur de résistance (32) est configuré pour calculer la résistance de coque sur la base d'au moins une information parmi une vitesse de navire de la coque (90), de l'information sur les conditions météorologiques et océaniques auxquelles la coque (90) est confrontée, un tirant d'eau de la coque (90) et un angle de gouvernail de la coque (90), et sur la base en outre d'une sortie présente du moteur principal (74), et
le contrôleur de bulle d'air (20) est configuré pour commencer à souffler la bulle d'air (B) vers l'extérieur ou pour augmenter une quantité de bulle d'air (B) soufflée vers l'extérieur quand la résistance de coque calculée par le calculateur de résistance (32) est supérieure à une valeur de référence (R1).

2. Dispositif de contrôle (10) selon la revendication 1, dans lequel le contrôleur de bulle d'air (20) comprend un déterminateur (33) configuré pour déterminer la valeur de référence (R1) sur la base d'information concernant la résistance au frottement de la coque (90) dans l'eau, la résistance au frottement étant définie à l'avance concernant la coque (90).

3. Dispositif de contrôle (10) selon la revendication 1 ou 2, dans lequel
le contrôleur de bulle d'air (20) comprend un déterminateur (33) configuré pour déterminer la valeur de référence (R1) sur la base en outre d'au moins un paramètre parmi une sortie du moteur principal (74), une quantité de carburant consommée par le moteur principal (74) et une quantité d'énergie utilisée par le mécanisme de soufflage (80).

4. Dispositif de contrôle (10) selon l'une quelconque des revendications 1 à 3, dans lequel le contrôleur de bulle d'air (20) comprend un déterminateur (33) configuré pour déterminer la valeur de référence (R1) sur la base en outre d'un tirant d'eau présent de la coque (90).

5. Dispositif de contrôle (10) selon la revendication 4, dans lequel le déterminateur (33) est configuré pour déterminer la valeur de référence (R1) sur la base en outre d'une relation entre une quantité d'air soufflée par le mécanisme de soufflage (80) et une quantité d'énergie utilisée par le mécanisme de soufflage (80) en fonction du tirant d'eau.

6. Dispositif de contrôle (10) selon l'une quelconque des revendications 1 à 5, dans lequel le contrôleur de bulle d'air (20) comprend un déterminateur (33) configuré pour déterminer la valeur de référence (R1) sur la base en outre d'une relation entre une quantité de carburant consommée par un moteur principal (74) et une sortie du moteur principal (74).

7. Dispositif de contrôle (10) selon l'une quelconque des revendications 1 à 6, dans lequel le contrôleur de bulle d'air (20) est configuré pour arrêter de souffler la bulle d'air (B) vers l'extérieur ou pour diminuer la quantité de bulle d'air (B) soufflée vers l'extérieur quand la résistance de coque calculée par le calculateur de résistance (32) est inférieure à une deuxième valeur de référence (Q1).

8. Dispositif de contrôle (10) selon la revendication 7, dans lequel le contrôleur de bulle d'air (20) est configuré pour déterminer la deuxième valeur de référence (Q1) sur la base d'une quantité d'énergie présente utilisée par le mécanisme de soufflage (80).

9. Dispositif de contrôle (10) selon l'une quelconque des revendications 1 à 8, dans lequel le contrôleur de bulle d'air (20) est configuré pour augmenter ou diminuer la quantité de la bulle d'air (B) soufflée vers l'extérieur en fonction d'un tirant d'eau présent de la coque (90).

10. Dispositif de contrôle (10) selon la revendication 1, comprenant en outre :
un premier calculateur (35) configuré pour calculer une quantité de réduction d'énergie, qui est une quantité de consommation d'énergie réduite quand la bulle d'air (B) est soufflée par le mécanisme de soufflage (80) ; et
un deuxième calculateur (37) configuré pour calculer une quantité d'utilisation d'énergie, qui est une quantité d'énergie consommée pour faire fonctionner le mécanisme de soufflage (80), la quantité de réduction d'énergie et la quantité d'utilisation d'énergie étant calculées sur la base de la vitesse de navire présente de la coque (90), dans lequel
le contrôleur de bulle d'air (20) est configuré pour commencer à souffler la bulle d'air (B) vers l'extérieur ou pour augmenter la quantité de la bulle d'air (B) soufflée vers l'extérieur quand la quantité de réduction d'énergie calculée par le premier calculateur (35) est supérieure à la quantité d'utilisation d'énergie calculée par le deuxième calculateur (37).

11. Dispositif de contrôle (10) selon la revendication 10, dans lequel
le premier calculateur (35) comprend : un calculateur de rapport de réduction (38) configuré pour calculer un rapport de réduction de consommation de carburant en fonction de la vitesse de navire et du tirant d'eau de la coque (90) ; et un calculateur de consommation de carburant (39) configuré pour calculer une quantité de consommation de carburant actuelle du moteur principal (74) en fonction d'un régime actuel du moteur principal (74) et d'un état d'alimentation en carburant pour le moteur principal (74), et dans lequel le premier calculateur (35) est configuré pour calculer la quantité de réduction d'énergie en fonction du rapport de réduction de consommation de carburant calculé et de la quantité de consommation de carburant actuelle.

12. Dispositif de contrôle (10) selon la revendication 10 ou 11, dans lequel le mécanisme de soufflage (80) comprend : un moteur (81) ; un générateur d'énergie (82) entraîné par le moteur (81) ; et un compresseur (83) configuré pour comprimer l'air par l'électricité générée par le générateur d'énergie (82) et pour fournir l'air comprimé à la sortie d'air (84), et
dans lequel le deuxième calculateur (37) est configuré pour calculer la quantité d'utilisation d'énergie sur la base d'un paramètre quelconque parmi la quantité de carburant fournie au moteur (81), l'électricité générée par le générateur d'énergie (82), et l'électricité utilisée pour entraîner le compresseur (83).
